# FASCICULE DE BREVET EUROPEEN

(11) **EP 2 106 428 B1**
(45) Date de publication et mention de la délivrance du brevet: **02.06.2021**
(21) Numéro de dépôt: 07870371.7
(22) Date de dépôt: 30.11.2007
(51) Int. Cl.: C10G 3/00, C10G 45/08, C10G 45/62, C10G 65/04

(54) **PROCÉDÉ DE CONVERSION DE CHARGES ISSUES DE SOURCES RENOUVELABLES EN BASES CARBURANTS GAZOLES DE BONNE QUALITÉ**
VERFAHREN ZUR UMWANDLUNG VON LASTEN AUS ERNEUERBAREN QUELLEN IN DIESELKRAFTSTOFF-BASISMATERIALIEN VON HOHER QUALITÄT
METHOD FOR CONVERTING LOADS FROM RENEWABLE SOURCES INTO GOOD-QUALITY DIESEL FUEL BASES

(30) Priorité: 21.12.2006 FR 0611398
(43) Date de publication de la demande: 07.10.2009
(73) Titulaire: IFP Energies nouvelles, 92500 Rueil-Malmaison (FR)
(72) Inventeur: DUPASSIEUX, Nathalie, 69005 Lyon (FR); CHAPUS, Thierry, 69001 Lyon (FR)
(74) Mandataire: IFP Energies nouvelles
(86) Numéro de dépôt international: PCT/FR2007/001977
(87) Numéro de publication internationale: WO 2008/081101

(56) Documents cités:
- EP-A- 1 728 844
- EP-A- 1 741 767
- EP-A- 1 741 768
- EP-A2- 1 396 531
- FR-A1- 2 826 971
- FR-A1- 2 846 574

## Description

### Domaine de l'invention

Dans un contexte international marqué par la croissance rapide en besoin de carburants, en particulier de bases gazoles dans la communauté européenne, la recherche de nouvelles sources d'énergie renouvelables pouvant être intégrées au schéma traditionnel du raffinage et de la production de carburants constitue un enjeu majeur:

A ce titre, l'intégration dans le processus de raffinage de nouveaux produits d'origine végétale, issus de la conversion de la biomasse lignocellulosique ou issus de la production d'huiles végétales ou de grasses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux carburants de type pétroliers dans les pools carburants. En outre, les procédés connus à ce jour utilisant des huiles végétales ou des graisses animales sont à l'origine d'émissions de CO₂, connus pour ces effets négatifs sur l'environnement. Une meilleure utilisation de ces bio ressources, comme par exemple leur intégration dans le pool carburant présenterait donc un avantage certain.

La forte demande en carburants gazoles, couplée avec l'importance des préoccupations liées à l'environnement renforce l'intérêt d'utiliser des charges issues de sources renouvelables. Parmi ces charges on peut citer par exemple les huiles végétales, les graisses animales, brutes ou ayant subi un traitement préalable, ainsi que les mélanges de telles charges. Ces charges contiennent des structures chimiques de type triglycérides ou esters ou acides gras, la structure et la longueur de chaîne hydrocarbonée de ces derniers étant compatible avec les hydrocarbures présents dans les gazoles.

Une approche possible consiste à convertir les charges de type huiles végétales par transestérification. Les triglycérides, qui constituent essentiellement de telles charges, sont alors convertis, en présence d'un alcool et d'un catalyseur, en esters correspondants. Parmi les inconvénients de cette voie on peut citer : a/ l'augmentation des émissions de NOx, en raison de la présence d'oxygène dans les esters ; b/ la température d'ébullition assez élevée, de l'ordre de 360°C, ce qui peut poser problème pour respecter les spécifications de point final.

La demande de brevet n° EP 1,681,337 A décrit la transformation de telles charges par décarboxylation, pour former des paraffines ayant un atome de carbone de moins par rapport aux structures chimiques de départ. L'avantage de cette voie tel que décrit dans ce brevet consiste à limiter la consommation d'hydrogène nécessaire. En revanche, les rendements en bases gazoles s'en trouvent réduits. Les catalyseurs utilisés sont des catalyseurs métalliques.

Les brevets US 4,992,605 et US 5,705,722 décrivent des procédés de production de bases pour le pool gazole produites à partir de la transformation directe d'huiles végétales (colza, palme, soja, tournesol) ou de biomasse lignocellulosique en hydrocarbures saturés après hydrotraitement ou hydroraffinage de ces produits seuls.

Les procédés de conversion décrits sont opérés à des pressions comprises entre 0,48 et 1,52 MPa et à des températures comprises entre 350 à 450°C permettant d'obtenir des produits à haut indice de cétane. Les additifs pro-cétane ainsi obtenus sont mélangés au gazole à des teneurs de 5 à 30% en volume.

Ces deux brevets présentent comme inconvénient majeur une consommation d'hydrogène élevée due aux réactions de méthanisation ou de déplacement du gaz à l'eau ("water-gas shift reaction"). En outre, l'oxygène contenu dans les triglycérides est généralement décomposé par hydrodéoxygénation en présence de catalyseur d'hydrotraitement, ce qui est coûteux en hydrogène.

EP1396531 décrit un procédé de production d'une fraction gazole à partir d'une charge issue de source renouvelable. Le procédé de EP1396531 comprend une étape d'hydrotraitement opérant à une température comprise entre 200 et 500°C à une pression comprise entre 2 et 15 MPa et en présence d'un catalyseur comprenant un métal du groupe VIII et/ou du groupe VIB, de préférence sur un support alumine et/ou silice, une étape de séparation du CO, du CO2, des composés contenant de l'azote du soufre ou du phosphore, de l'effluent gazeux comprenant l'hydrogène.

EP1728844 décrit un procédé de production de gazole à partir de charges issue d'une source renouvelable comprenant un prétraitement pour éliminer les contaminants tels que les métaux alcalins et une étape d'hydrotraitement pour fournir une fraction gazole, l'étape d'hydrotraitement étant opérée à une température comprise entre 200 et 300°C et à une pression partielle comprise entre 3447 et 6895 kPa.

### Objet de l'invention

La présente invention concerne un procédé en continu pour la conversion en bases carburants gazoles, de charges provenant de sources renouvelables.

Les charges de départ sont issues de sources renouvelables, telles que les huiles et graisses d'origine végétale ou animale, ou des mélanges de telles charges, contenant des triglycérides et/ou des acides gras et/ou des esters. Parmi les huiles végétales possibles, elles peuvent être brutes ou raffinées, totalement ou en partie, et issues des végétaux suivants : colza, tournesol, soja, palme, palmiste, olive, noix de coco, cette liste n'étant pas limitative. Parmi les graisses possibles, on peut citer toutes les graisses animales telles que le lard ou les graisses composés de résidus de l'industrie alimentaire ou issus des industries de la restauration.

Les charges ainsi définies contiennent des structures triglycérides et/ou acides gras, dont les chaînes grasses contiennent un nombre d'atomes de carbone compris entre 8 et 25.

Les hydrocarbures produits lors de la conversion des charges de départ sont caractérisés par :
a/ un nombre d'atomes de carbone égal à celui des chaînes des acides gras de départ, si le mécanisme est un mécanisme d'hydrogénation du groupe carboxylique en groupe alkyl.
b/ une chaîne hydrocarbonée comptant un atome de carbone de moins que les chaînes des acides gras de départ, si le mécanisme mis en jeu est une décarboxylation / décarbonylation.

Il est connu d'après l'état de l'art que les deux voies de transformation coexistent généralement. Le procédé décrit dans la présente invention vise par conséquent à maximiser le rendement en gazole, et cherche à promouvoir le mécanisme d'hydrogénation décrit en a/. Le choix des catalyseurs et des conditions opératoires visera donc à orienter la sélectivité au bénéfice de l'hydrogénation, tout en cherchant à limiter au strict nécessaire la consommation d'hydrogène, et en particulier celle qui résulterait en l'occurrence de réactions non désirées. Ainsi, la limitation au strict nécessaire de la consommation d'hydrogène est obtenue par une combinaison avantageuse des conditions opératoires et en particulier par une optimisation de la quantité totale d'hydrogène mélangée a la charge.

Les bases gazoles produites sont d'excellente qualité :
▪ elles présentent une faible teneur en soufre, azote et aromatiques.
▪ un excellent cétane, en raison de la structure intégralement paraffinique des hydrocarbures formés.
▪ une basse densité (généralement moins de 800 kg/m³), ce qui est un avantage dans la mesure où cela facilite l'obtention pour le pool gazole de la spécification en la matière qui est d'au maximum 845 kg/m³.

### Résumé de l'invention.

L'invention porte sur un procédé de traitement d'une charge issue d'une source renouvelable comme décrit dans la revendication 1.

### Description de l'invention

La présente invention est particulièrement dédiée à la préparation de bases carburant gazoles correspondant aux nouvelles normes environnementales, à partir de charges issues de sources renouvelables.

Ces charges sont constituées par l'ensemble des huiles végétales et des graisses animales, contenant essentiellement des triglycérides et des acides gras ou des esters, avec des chaînes grasses hydrocarbonées ayant un nombre d'atomes de carbone compris entre 6 et 25. Ces huiles peuvent être les huiles de palme, de palmiste, de coprah, de ricin et de coton, les huiles d'arachides, de lin et de crambe et toutes les huiles issues par exemple du tournesol ou du colza par modification génétique ou hybridation. Le huiles de fritures, les huiles animales varies comme les huiles de poisson, le suif, le saindoux peuvent être utilisés. Les densités à 15°C de ces huiles sont comprises entre 850 et 970 kg/m³ et leur viscosités cinématiques à 40°C sont comprises entre 20 et 400 mm2/s , plus généralement entre 30 et 50 mm2/s.

Selon l'invention, ces charges sont exemptes ou ont des teneurs en soufre, en azote et en aromatiques faibles : teneurs en soufre et en azote typiquement inférieures à 500 ppm, et teneurs en aromatiques inférieures à 5% poids.

La charge subit préalablement à l'étape a) du procédé selon l'invention une étape de pré-traitement ou pré-raffiange de façon à éliminer, par un traitement approprié, des contaminants tels que des métaux, comme les composés alcalins par exemple sur des résines échangeuses d'ions, les alcalino-terreux et le phosphore. Des traitements appropriés peuvent par exemple être des traitements thermiques et/ou chimiques bien connus de l'homme du métier.

Le prétraitement consiste en une pre-hydrogénation douce de ladite charge de façon à éviter les réactions secondaires des doubles liaisons. La pré-hydrogénation douce opère à une température comprise entre 50 et 400 °C et à une pression d'hydrogène comprise entre 0,1 et 10 MPa et de manière préférée, à une température comprise entre 150 et 200 °C. Le catalyseur de pré-hydrogénation comprend des métaux du groupe VIII et/ou VIB et de manière préférée, le catalyseur de pré-hydrogénation est un catalyseur à base palladium, de platine de nickel, de nickel et de molybdène ou à base de cobalt et de molybdène, supporté par un support alumine et/ou silice.

Des charges pré raffinées sont utilisées dans le procédé selon l'invention.

### Étape a) : Hydrotraitement de la charge issue d'une source renouvelable.

Dans l'étape a) du procédé selon l'invention, la charge, prétraitée, est mise au contact d'un catalyseur hétérogène à une température comprise entre 220 et 320°C, et de manière encore plus préférée entre 220 et 310°C. La pression est comprise 1 MPa et 4 MPa.. La vitesse spatiale horaire est comprise entre 0,1 h⁻¹ et 10 h⁻¹. La charge est mise au contact du catalyseur en présence d'hydrogène. La quantité totale d'hydrogène mélangée à la charge est telle que le ratio hydrogène/charge est compris entre 150 et 450 Nm³ d'hydrogène/m³ de charge, cela correspond donc à une quantité d'hydrogène ajoutée à la charge présente d'au moins 0,5% poids d'hydrogène par rapport à la charge.

Dans l'étape a) du procédé selon l'invention, on utilise au moins un lit fixe de catalyseur d'hydrotraitement comprenant une fonction hydro-déshydrogénante et un support amorphe. On utilise un support d'alumine et mieux d'alumine η, δ ou γ.

La fonction hydrogénante est assurée par le nickel et le molybdène.

On emploie un catalyseur comprenant de 1 à 5 % en poids d'oxyde de nickel et de 5 à 25 % en poids d'oxyde de molybdène sur un support minéral amorphe alumine, les pourcentages étant exprimés en % poids par rapport à la masse totale du catalyseur.

La teneur totale en oxydes de nickel et molybdène dans le catalyseur est avantageusement comprise entre 5 et 40 % en poids et de manière préférée comprise entre 7 et 30 % en poids par rapport à la masse totale du catalyseur.
Le rapport pondéral exprimé en oxyde métallique entre molybdène sur nickel est avantageusement compris entre 20 et 1 et de manière préférée entre 10 et 2.

Ledit catalyseur utilisé dans l'étape a) du procédé selon l'invention doit être caractérisé idéalement par un fort pouvoir hydrogénant de façon à orienter le plus possible la sélectivité de la réaction vers une hydrogénation conservant le nombre d'atomes de carbone des chaînes grasses, ceci afin de maximiser le rendement en hydrocarbures entrant dans le domaine de distillation des gazoles. C'est pourquoi le cas préféré de réalisation opère à température relativement basse. Maximiser la fonction hydrogénante permet également de limiter les réactions de polymérisation et/ou de condensation conduisant à la formation de coke qui dégraderait la stabilité des performances catalytiques. On utilisera un catalyseur de type NiMo.

Ledit catalyseur utilisé dans l'étape a) d'hydrotraitement du procédé selon l'invention contientégalement un élément phosphore déposé sur le support. On peut également déposer du silicium sur le support, avec le phosphore.

La teneur en poids d'oxyde dudit élément est inférieure à 10 % et elle est d'au moins 0.001 %.

Les métaux des catalyseurs utilisés dans l'étape a) d'hydrotraitement du procédé selon l'invention sont des métaux sulfurés.

On ne sortirait pas du cadre de la présente invention en utilisant dans l'étape a) du procédé selon l'invention, de manière simultanée ou de manière successive, un seul catalyseur ou plusieurs catalyseurs différents. Cette étape peut être effectuée industriellement dans un ou plusieurs réacteurs avec un ou plusieurs lits catalytiques et à courant descendant de liquide.

### Étape b) : Séparation de l'effluent hydrotraité issu de l'étape a).

Dans l'étape b) du procédé selon l'invention, l'effluent hydrotraité est soumis au moins en partie, et de préférence en totalité, à une ou plusieurs séparations. Le but de cette étape est de séparer les gaz du liquide, et notamment, de récupérer les gaz riches en hydrogène pouvant contenir également des gaz tels que CO et CO₂ et au moins un base gazole liquide à teneur en soufre inférieure à 10 ppm poids. L'eau éventuellement formée lors de l'étape a) est séparée au moins en partie du produit hydrocarboné. L'étape b) de séparation est suivie d'une étape d'élimination de l'eau.

L'étape d'enlèvement d'eau a pour but d'éliminer au moins en partie l'eau produite lors des réactions d'hydrotraitement. On entend par élimination de l'eau, l'élimination de l'eau produite par les réactions d'hydrodeoxygénation (HDO).

Une élimination de l'eau plus complète est envisagée dans le cas ou l'effluent issu de l'étape b) serait envoyé sur un catalyseur d'hydroisomérisation dans une étape ultérieure optionnelle, en fonction de la tolérance à l'eau du catalyseur. L'élimination de l'eau est réalisée par toutes les méthodes et techniques connues de l'homme du métier, par exemple par séchage, passage sur un dessicant, flash, décantation....

Une partie au moins de la base gazole liquide obtenue à l'issu de l'étape b) est éventuellement hydroisomérisée en présence d'un catalyseur d'hydroisomérisation décrit dans la demande de brevet numéro FR 2 826 971.

Un catalyseur préféré d'hydroisomérisation comprend 0,05-10 % en poids d'au moins un métal noble du groupe VIII et de préférence choisi dans le groupe formé par le platine et le palladium pris seuls ou en mélange, déposé sur un support amorphe de silice-alumine (qui de préférence contient entre 5 et 70 % en poids de silice et de manière plus préférée contient entre 22 et 45% en poids de silice) qui présente une surface spécifique BET de 100-500m2/g et le catalyseur présente :
- un diamètre moyen des mésopores compris entre 1-12 nm,
- un volume poreux des pores dont le diamètre est compris entre le diamètre moyen tel que défini précédemment diminué de 3 nm et le diamètre moyen tel que défini précédemment augmenté de 3 nm est supérieur à 40 % du volume poreux total,
- une dispersion du métal noble comprise entre 20-100 %,
- un coefficient de répartition du métal noble supérieur à 0,1.

Un autre catalyseur préféré d'hydroisomérisation est décrit dans la demande de brevet FR 2 846 574 et comprend :
- au moins un élément hydro-déshydrogénant choisi dans le groupe formé par les éléments du groupe VIB et du groupe VIII de la classification périodique,
- un support non zéolitique à base de silice - alumine contenant une quantité supérieure à 10% poids et inférieure ou égale à 80% poids de silice (SiO2),
- un diamètre moyen poreux, mesuré par porosimétrie au mercure, compris entre 20 et 140 Å,
- un volume poreux total, mesuré par porosimétrie au mercure, compris entre 0,1 ml/g et 0,6 ml/g,
- un volume poreux total, mesuré par porosimétrie azote, compris entre 0,1 ml/g et 0,6 ml/g,
- une surface spécifique BET comprise entre 150 et 500 m2/g,
- un volume poreux, mesuré par porosimétrie au mercure, compris dans les pores de diamètre supérieurs à 140 Å inférieur à 0,1 ml/g ,
- un volume poreux, mesuré par porosimétrie au mercure, compris dans les pores de diamètre supérieurs à 160 Å inférieur à 0,1 ml/g,
- un volume poreux, mesuré par porosimétrie au mercure, compris dans les pores de diamètre supérieurs à 200 Å inférieur à 0,1 ml/g,
- un volume poreux, mesuré par porosimétrie au mercure, compris dans les pores de diamètre supérieurs à 500 Å inférieur à 0,1 ml/g et de manière préférée inférieur à 0,01 ml/g.

De manière préférée, l'étape d'hydroisomérisation éventuelle opère à co-courant.

Les conditions opératoires dans lesquelles est effectuée l'étape d'hydroisomérisation éventuelle sont les suivantes : La température est avantageusement comprise entre 200 et 450°C et de préférence entre 250°C et 450°C, de manière préférée entre 300 à 450°C et de manière encore plus préférée, comprise entre 320-420°C.
La pression est avantageusement comprise entre 0,2 et 15 MPa et de manière préférée entre 0,5 et 10 MPa et de manière encore plus préférée entre 1 et 9 MPa, la vitesse spatiale est avantageusement comprise entre 0.1 h⁻¹ et 10 h⁻¹ et de manière préférée entre 0,2 et 7 h^{- 1} et de manière encore plus préférée entre 0,5 h⁻¹ et 5 h⁻¹. Le taux d'hydrogène est avantageusement compris entre 100 et 2000 Nm³ par Nm³ de charge et par heure et de manière préférée entre 150 et 1500 Nm³ par Nm³ de charge.

L'hydrogène utilisé pour la mise en oeuvre du procédé provient d'une unité industrielle de reforming.

### Traitement et recyclage des gaz

Le gaz contenant l'hydrogène qui a été séparé dans l'étape b) est, si nécessaire, au moins en partie traité pour réduire sa teneur en CO ou CO₂ (de préférence par lavage avec au moins une amine) avant de le recycler dans l'étape a).

La possibilité existe d'additionner au gaz de recyclage une certaine quantité de composé soufré (telle que le DMDS, di-méthyl disulfure), qui par décomposition thermique produit de l'hydrogène sulfuré H₂S. Ce dispositif permet de maintenir si nécessaire le catalyseur à l'état sulfuré. De façon avantageuse, la quantité de composé soufré introduite est telle que la teneur en H₂S dans le gaz de recycle est au moins de 15 ppm vol, de préférence d'au moins 0,1 % vol, voire d'au au moins 0.2 % vol.

On peut avantageusement introduire l'hydrogène de recycle avec la charge entrant dans l'étape a) et/ou sous forme d'hydrogène de trempe entre les lits de catalyseurs.

### Produits obtenus.

Le produit fourni selon ce procédé est doté d'excellentes caractéristiques, qui en font une base gazole d'excellente qualité :
▪ sa teneur en soufre est inférieure à 10 ppm poids.
▪ sa teneur en aromatiques totaux est inférieure à 5 % pds, et la teneur en polyaromatiques inférieure à 2% pds.
▪ l'indice de cétane est excellent, supérieur à 80.
▪ la densité est inférieure à 840 kg/m³, et le plus souvent inférieure à 820 kg/m³.
▪ Sa viscosité cinématique à 40°C est 2 à 8 mm²/s.

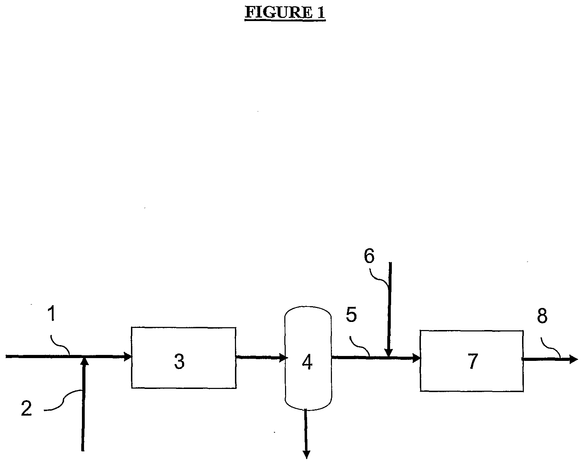

D'après la figure 1, la charge issue de sources renouvelables est admise via la ligne (1) dans la zone d'hydrotraitement (3) opérant en présence d'hydrogène, l'hydrogène étant amené par la tubulure (2). Dans la zone d'hydrotraitement (3), la charge est mise en contact avec un catalyseur d'hydrotraitement décrit ci-dessus. L'effluent hydrotraité est ensuite introduit dans une zone (4) de séparation de manière à séparer les gaz des liquides. Les gaz riches en hydrogène sont récupérés et évacués dans la conduite (5) et la fraction base gazole liquide est récupérée et envoyée dans une étape ultérieure optionnelle d'hydroisomérisation (7) par la conduite (5). Selon la fig.1 la fraction base gazole liquide est introduite , ainsi un flux d'hydrogène par la conduite (6), dans une zone optionnelle d'hydroisomérisation (7) contenant un catalyseur d'hydroisomérisation décrit ci-dessus.

### Exemple

### Étape a) : hydrotraitement

Dans un réacteur régulé en température de manière à assurer un fonctionnement isotherme et à lit fixe chargé de 190 ml de catalyseur d'hydrotraitement à base de nickel et de molybdène, présentant une teneur en oxyde de nickel égale à 3 % poids, et une teneur en oxyde de molybdène égale à 16 % poids et une teneur en P₂O₅ égale à 6%, le catalyseur étant préalablement sulfuré, on introduit 170g/h huile de colza pré-raffinée de densité 920 kg/m3 présentant une teneur en soufre inférieur à 1 ppm, d'indice de cétane de 35 et dont la composition est détaillée ci dessous :

| Glycérides d 'acide gras | nature de chaîne grasse | % en masse |
|---|---|---|
| Palmitique | C16:0 | 4 |
| Palmitoléique | C16:1 | <0.5 |
| Stéarique | C18:0 | 2 |
| Oléique | C18:1 | 61 |
| Linoléique | C18:2 | 20 |
| Linoléique | C18:3 | 9 |
| Arachidique | C20:0 | <0.5 |
| Gadoléique | C20:1 | 1 |
| Béhénique | C22:0 | <0.5 |
| Erucique | C22:1 | <1 |

300 Nm³ d'hydrogène/m³ de charge sont introduits dans le réacteur maintenu à 300°C et sous 4 MPa de pression.

### Étape b) : séparation de l'effluent issu de l'étape a).

La totalité de l"effluent hydrotraité issu de l'étape a) est séparé de manière à récupérer les gaz riches en hydrogène et une base gazole liquide. 165 g/h de base gazole de densité 790kg/m³ et d'une teneur en soufre inférieur à 0.5 ppm et de d'indice de cétane supérieur à 100 sont produits.

Le procédé selon l'invention permet donc l'obtention de base gazole d'excellente qualité correspondant aux spécifications en vigueur.

## Revendications

1. Procédé de traitement d'une charge issue d'une source renouvelable, ladite charge étant constituée par l'ensemble des huiles végétales et des graisses animales, contenant des triglycérides et des acides gras ou des esters, avec des chaînes grasses hydrocarbonées ayant un nombre d'atomes de carbone compris entre 6 et 25, ladite charge ayant des teneurs en soufre, en azote inférieures à 500 ppm, et des teneurs en aromatiques inférieures à 5% poids,
ladite charge subissant une étape de pré-traitement ou pré-raffinage consistant en une pre-hydrogénation douce de ladite charge opérant à une température comprise entre 50 et 400 °C et à une pression d'hydrogène comprise entre 0,1 et 10 MPa sur un catalyseur comprenant des métaux du groupe VIII et/ou VIB et un support alumine et/ou silice,
ledit procédé comprenant les étapes suivantes :
a) hydrotraitement en présence d'un catalyseur en lit fixe, ledit catalyseur comprenant de 1 à 5 % en poids d'oxyde de nickel NiO et de 5 à 25 % en poids d'oxyde de molybdène (MoO3), sur un support minéral amorphe, , et un support amorphe d'alumine, les pourcentages étant exprimés en % poids par rapport à la masse totale du catalyseur, ledit catalyseur contenant un élément phosphore déposé sur le support, la teneur en poids d'oxyde dudit élément étant d'au moins 0,001% et inférieure à 10%, les métaux dudit catalyseur étant des métaux sulfurés,
à une température comprise entre 220 et 320°C, à une pression comprise entre 1 MPa et 4 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 150 et 450 Nm³ d'hydrogène/m³ de charge, correspondant à une quantité d'hydrogène ajoutée à la charge présente d'au moins 0,5% poids d'hydrogène par rapport à la charge,
b) séparation à partir de l'effluent issu de l'étape a) de l'hydrogène, des gaz et d'au moins une base gazole présentant une teneur en soufre inférieure à 10 ppm poids, ladite étape de séparation étant suivie d'une étape d'élimination de l'eau par séchage, passage sur un dessicant, flash, décantation.

2. Procédé selon la revendication 1 dans lequel une partie au moins de la base gazole liquide obtenue à l'issu de l'étape b) est hydroisomérisée en présence d'un catalyseur d'hydroisomérisation.

3. Procédé selon la revendication 2 dans lequel le catalyseur d'hydroisomérisation comprend 0,05-10 % en poids d'au moins un métal noble du groupe VIII et de préférence choisi dans le groupe formé par le platine et le palladium pris seuls ou en mélange, déposé sur un support amorphe de silice-alumine qui présente une surface spécifique BET de 100-500m2/g et le catalyseur présente :
- un diamètre moyen des mésopores compris entre 1-12 nm,
- un volume poreux des pores dont le diamètre est compris entre le diamètre moyen tel que défini précédemment diminué de 3 nm et le diamètre moyen tel que défini précédemment augmenté de 3 nm est supérieur à 40 % du volume poreux total,
- une dispersion du métal noble comprise entre 20-100 %,
- un coefficient de répartition du métal noble supérieur à 0,1.

4. Procédé selon la revendication 2 dans lequel le catalyseur d'hydroisomérisation comprend
- au moins un élément hydro-déshydrogénant choisi dans le groupe formé par les éléments du groupe VIB et du groupe VIII de la classification périodique,
- un support non zéolitique à base de silice - alumine contenant une quantité supérieure à 10% poids et inférieure ou égale à 80% poids de silice (SiO2),
- un diamètre moyen poreux, mesuré par porosimétrie au mercure, compris entre 20 et 140 Å,
- un volume poreux total, mesuré par porosimétrie au mercure, compris entre 0,1 ml/g et 0,6 ml/g,
- un volume poreux total, mesuré par porosimétrie azote, compris entre 0,1 ml/g et 0,6 ml/g,
- une surface spécifique BET comprise entre 150 et 500 m2/g,
- un volume poreux, mesuré par porosimétrie au mercure, compris dans les pores de diamètre supérieurs à 140 Å inférieur à 0,1 ml/g ,
- un volume poreux, mesuré par porosimétrie au mercure, compris dans les pores de diamètre supérieurs à 160 Å inférieur à 0,1 ml/g,
- un volume poreux, mesuré par porosimétrie au mercure, compris dans les pores de diamètre supérieurs à 200 Å inférieur à 0,1 ml/g,
- un volume poreux, mesuré par porosimétrie au mercure, compris dans les pores de diamètre supérieurs à 500 Å inférieur à 0,1 ml/g .

5. Procédé selon l'une des revendications 2 à 4 dans lequel l'étape c) est effectuée à une température comprise entre 200 et 450°C, une pression comprise entre 0,2 et 15 MPa, une vitesse spatiale comprise entre 0,1 h-1 et 10 h-1 et un taux d'hydrogène compris entre 100 et 2000 Nm3 par Nm3 de charge et par heure.

## Patentansprüche

1. Verfahren zur Behandlung einer Charge, die aus einer erneuerbaren Quelle stammt, wobei die Charge aus der Gesamtheit der pflanzlichen Öle und tierischen Fette besteht, wobei sie Triglyceride und Fettsäuren oder Ester enthält, mit fettartigen Kohlenwasserstoffketten, deren Anzahl an Kohlenstoffatomen im Bereich von 6 bis 25 liegt, wobei die Charge Gehalte an Schwefel, an Stickstoff von weniger als 500 ppm und Gehalte an Aromaten von weniger als 5 Gewichts-% hat,
wobei die Charge einen Schritt der Vorbehandlung oder Vorraffination erfährt, welcher in einer milden Vorhydrierung der Charge besteht, welche bei einer Temperatur im Bereich von 50 bis 400 °C und bei einem Wasserstoffdruck im Bereich von 0,1 bis 10 MPa über einem Katalysator betrieben wird, der Metalle der Gruppe VIII und/oder VIB und einen Träger aus Aluminiumoxid und/oder Siliciumdioxid umfasst,
wobei das Verfahren die folgenden Schritte umfasst
a) Hydrobehandlung in Gegenwart eines Festbett-Katalysators, wobei der Katalysator 1 bis 5 Gewichts-% an Nickeloxid NiO und 5 bis 25 Gewichts-% an Molybdänoxid (MoO3), auf einem amorphen mineralischen Träger, sowie einen amorphen Träger aus Aluminiumoxid umfasst, wobei die Prozentangaben in Gewichts-% unter Bezugnahme auf die Gesamtmasse des Katalysators ausgedrückt sind, wobei der Katalysator ein Phosphorelement enthält, das auf den Träger aufgebracht ist, wobei der Gehalt dieses Elements nach Gewicht als Oxid mindestens 0,001 % beträgt und geringer als 10 % ist, wobei die Metalle des Katalysators als Schwefelverbindungen von Metallen vorliegen,
bei einer Temperatur im Bereich von 220 bis 320 °C, bei einem Druck im Bereich von 1 MPa bis 4 MPa, bei einer stundenbezogenen Raumgeschwindigkeit im Bereich von 0,1 h⁻¹ bis 10 h⁻¹ und in Gegenwart einer Gesamtmenge an Wasserstoff, die derart mit der Charge vermischt wird, dass das Wasserstoff/Chargen-Verhältnis im Bereich von 150 bis 450 Nm³ an Wasserstoff / m³ an Charge liegt, was einem Zusatz einer Wasserstoffmenge zur vorliegenden Charge von mindestens 0,5 Gewichts-% an Wasserstoff unter Bezugnahme auf die Charge entspricht,
b) Trennen, ausgehend von dem ausgangsseitigen Stoffstrom, wie er nach Schritt a) erhalten wird, von Wasserstoff, gasförmigen Stoffen und mindestens einer Dieselkraftstoffgrundlage, die einen Schwefelgehalt von weniger als 10 ppm nach Gewicht hat, wobei im Anschluss an den Trennschritt ein Schritt des Entfernens von Wasser durch Trocknung, Leiten über ein Trockenmittel, Stromtrockner, Absetzenlassen erfolgt.

2. Verfahren nach Anspruch 1, wobei mindestens eine Teilmenge der flüssigen Dieselkraftstoffgrundlage, welche nach dem Schritt b) erhalten wird, in Gegenwart eines Hydroisomerisierungskatalysators hydroisomerisiert wird.

3. Verfahren nach Anspruch 2, wobei der Hydroisomerisierungskatalysator 0,05 bis 10 Gewichts-% an mindestens einem Edelmetall der Gruppe VIII umfasst, wobei dieses vorzugsweise aus der Gruppe ausgewählt ist, welche von Platin und Palladium gebildet wird, welche für sich genommen oder in Mischung zum Einsatz kommen, und es auf einen amorphen Träger aus Siliciumdioxid-Aluminiumoxid aufgebracht ist, welcher eine spezifische BET-Oberfläche von 100 bis 500 m2/g aufweist, und wobei der Katalysator Folgendes aufweist:
- einen mittleren Durchmesser der Mesoporen im Bereich von 1 bis 12 nm,
- ein Porenvolumen der Poren, deren Durchmesser im Bereich zwischen dem mittleren Durchmesser gemäß der obigen Begriffsbestimmung abzüglich 3 nm und dem mittleren Durchmesser gemäß der obigen Begriffsbestimmung zuzüglich 3 nm liegt, mehr als 40 % des Gesamtporenvolumens ausmacht,
- eine Dispersion des Edelmetalls im Bereich von 20 bis 100 %,
- einen Verteilungskoeffizienten des Edelmetalls von mehr als 0,1.

4. Verfahren nach Anspruch 2, wobei der Hydroisomerisierungskatalysator Folgendes umfasst
- mindestens ein hydrierendes-dehydrierendes Element, das aus der Gesamtheit ausgewählt ist, welche von den Elementen der Gruppe VIB und der Gruppe VIII des Periodensystems gebildet wird,
- einen nicht-zeolithartigen Träger auf Grundlage von Siliciumdioxid-Aluminiumoxid, der eine Menge an Siliciumdioxid (SiO2) enthält, die größer als 10 Gewichts-% ist und höchstens 80 Gewichts-% beträgt,
- einen mittleren Porendurchmesser, gemessen mittels Quecksilberporosimetrie, im Bereich von 20 bis 140 Å,
- ein Gesamtporenvolumen, gemessen mittels Quecksilberporosimetrie, im Bereich von 0,1 mL/g bis 0,6 mL/g,
- ein Gesamtporenvolumen, gemessen mittels Stickstoffporosimetrie, im Bereich von 0,1 mL/g bis 0,6 mL/g,
- eine spezifische BET-Oberfläche im Bereich von 150 bis 500 m2/g,
- ein Porenvolumen, gemessen mittels Quecksilberporosimetrie, das in den Poren mit einem Durchmesser von mehr als 140 Å enthalten ist, von weniger als 0,1 mL/g,
- ein Porenvolumen, gemessen mittels Quecksilberporosimetrie, das in den Poren mit einem Durchmesser von mehr als 160 Å enthalten ist, von weniger als 0,1 mL/g ist,
- ein Porenvolumen, gemessen mittels Quecksilberporosimetrie, das in den Poren mit einem Durchmesser von mehr als 200 Å enthalten ist, von weniger als 0,1 mL/g ist,
- ein Porenvolumen, gemessen mittels Quecksilberporosimetrie, das in den Poren mit einem Durchmesser von mehr als 500 Å enthalten ist, von weniger als 0,1 mL/g.

5. Verfahren nach einem der Ansprüche 2 bis 4, wobei der Schritt c) bei einer Temperatur im Bereich von 200 bis 450 °C, einem Druck im Bereich von 0,2 bis 15 MPa, einer Raumgeschwindigkeit im Bereich von 0,1 h-1 bis 10 h-1 und einem Wasserstoffanteil im Bereich von 100 bis 2.000 Nm3 pro Nm3 an Charge und pro Stunde durchgeführt wird.

## Claims

1. Process for the treatment of a feedstock resulting from a renewable source, the said feedstock consisting of all vegetable oils and animal fats, containing triglycerides and fatty acids or esters, with fatty hydrocarbon chains having a number of carbon atoms of between 6 and 25, the said feedstock having contents of sulfur and of nitrogen of less than 500 ppm, and contents of aromatics of less than 5% by weight,
the said feedstock being subjected to a pretreatment or prerefining stage consisting of a gentle prehydrogenation of the said feedstock carried out at a temperature of between 50 and 400°C and at a hydrogen pressure of between 0.1 and 10 MPa over a catalyst comprising metals from Groups VIII and/or VIb and an alumina and/or silica support,
the said process comprising the following stages:
a) hydrotreating in the presence of a fixed bed catalyst, the said catalyst comprising from 1% to 5% by weight of nickel oxide (NiO) and from 5% to 25% by weight of molybdenum oxide (MoO₃), on an amorphous inorganic support, and an amorphous alumina support, the percentages being expressed as % by weight with respect to the total weight of the catalyst, the said catalyst containing an element phosphorus deposited on the support, the content by weight of oxide of the said element being at least 0.001% and less than 10%, the metals of the said catalyst being sulfur-comprising metals,
at a temperature of between 220 and 320°C, at a pressure of between 1 MPa and 4 MPa, at an hourly space velocity of between 0.1 h⁻¹ and 10 h⁻¹ and in the presence of a total amount of hydrogen mixed with the feedstock such that the hydrogen/feedstock ratio is between 150 and 450 Sm³ of hydrogen/m³ of feedstock, corresponding to an amount of hydrogen added to the present feedstock of at least 0.5% by weight of hydrogen with respect to the feedstock,
b) separation, from the effluent resulting from stage a), of the hydrogen, of the gases and of at least one gas oil base exhibiting a content of sulfur of less than 10 ppm by weight, the said separation stage being followed by a stage of removal of the water by drying, passing over a desiccant, flash distillation or separation by settling.

2. Process according to Claim 1, in which a part at least of the liquid gas oil base obtained on conclusion of stage b) is hydroisomerized in the presence of a hydroisomerization catalyst.

3. Process according to Claim 2, in which the hydroisomerization catalyst comprises 0.05-10% by weight of at least one noble metal from Group VIII and preferably chosen from the group formed by platinum and palladium, taken alone or as a mixture, deposited on an amorphous silica/alumina support which exhibits a BET specific surface of 100-500 m²/g, and the catalyst exhibits:
- a mean diameter of the mesopores of between 1-12 nm,
- a pore volume of the pores, the diameter of which is between the mean diameter as defined above decreased by 3 nm and the mean diameter as defined above increased by 3 nm, is greater than 40% of the total pore volume,
- a dispersion of the noble metal of between 20-100%,
- a coefficient of distribution of the noble metal of greater than 0.1.

4. Process according to Claim 2, in which the hydroisomerization catalyst comprises:
- at least one hydro-dehydrogenating element chosen from the group formed by the elements from Group VIb and from the Group VIII of the Periodic Table,
- a non-zeolitic support based on silica/alumina containing an amount of greater than 10% by weight and less than or equal to 80% by weight of silica (SiO₂),
- a mean pore diameter, measured by mercury porosimetry, of between 20 and 140 Å,
- a total pore volume, measured by mercury porosimetry, of between 0.1 ml/g and 0.6 ml/g,
- a total pore volume, measured by nitrogen porosimetry, of between 0.1 ml/g and 0.6 ml/g,
- a BET specific surface of between 150 and 500 m²/g,
- a pore volume, measured by mercury porosimetry, comprised in the pores with a diameter of greater than 140 Å, of less than 0.1 ml/g,
- a pore volume, measured by mercury porosimetry, comprised in the pores with a diameter of greater than 160 Å, of less than 0.1 ml/g,
- a pore volume, measured by mercury porosimetry, comprised in the pores with a diameter of greater than 200 Å, of less than 0.1 ml/g,
- a pore volume, measured by mercury porosimetry, comprised in the pores with a diameter of greater than 500 Å, of less than 0.1 ml/g.

5. Process according to one of Claims 2 to 4, in which stage c) is carried out at a temperature of between 200 and 450°C, a pressure of between 0.2 and 15 MPa, a space velocity of between 0.1 h⁻¹ and 10 h⁻¹ and a hydrogen content of between 100 and 2000 Sm³ per Sm³ of feedstock and per hour.
